# EUROPEAN PATENT SPECIFICATION

(11) **EP 2 627 566 B1**
(45) Date of publication and mention of the grant of the patent: **19.08.2015**
(21) Application number: 11787627.6
(22) Date of filing: 13.10.2011
(51) Int. Cl.: B65D 5/48, B65D 5/50, B65D 77/00, B65D 81/34, B65D 85/36, A21D 10/02, A21D 6/00

(54) **STRETCH AND BAKE FOOD ITEM TRAY**
DEHNBARE SCHALE ZUM BACKEN EINES LEBENSMITTELARTIKELS
PLATEAU ÉTIRABLE POUR LA CUISSON D'UN ALIMENT

(30) Priority: 14.10.2010 US 393173 P
(43) Date of publication of application: 21.08.2013
(73) Proprietor: Nestec S.A., 1800 Vevey (CH)
(72) Inventor: RADLEY, Geoffrey, Leeds West Yorkshire LS8 4AQ (GB); HUFFMAN, Samuel, Columbus, Ohio OH 43221 (US); BELSER, Deborah, Chagrin Falls, Ohio OH 44023 (US)
(74) Representative: Mollet, Beat Max
(86) International application number: PCT/EP2011/067856
(87) International publication number: WO 2012/049233

(56) References cited:
- WO-A2-2006/020556
- DE-A1- 4 017 399
- GB-A- 660 912
- US-A1- 2004 076 722
- US-A1- 2005 084 570
- US-A1- 2007 246 460

## Description

### TECHNICAL FIELD

The invention relates to a ready-to-bake food item containment product which includes a plurality of food item portions each containing a sufficient amount of a food item to form an individual baked food item product and a planar sheet of ovenable material capable of initially being arranged in a compact configuration and subsequently being transformed into an expanded configuration. The transformation of the compact configuration into the expanded configuration arranges the food item portions in spaced locations on the sheet in position for baking into individual baked food item products. The product can be preserved in a refrigerator or freezer. The invention further relates to a method for preparing individual food item portions.

### BACKGROUND

Ready made food items already exist on the market. Such food items include appetizers, entrees and desserts. While the convenience of ready made food items has benefits, such as overall reduced preparation time, they have many drawbacks. Many items require extensive handling prior to baking, problems with placement on backing tins, and extensive clean up.

For example, ready made cookie dough is typically refrigerated and packaged either in a cylindrical shape or packaged in a cup. During use, the consumer uses a spoon or a knife to form the cookie in a circular shape prior to baking. This particular cookie dough preparation requires extensive manipulation of the cookie dough prior to use. If the cookie dough is packaged in the form of a block or sheet, then a forming device is needed in order to give the cookie the desired circular form. This cookie dough manipulation, however, leaves remnants of cookie dough pieces which must then be recycled and reshaped if desired. Further, extensive manipulation of some types of dough is not desired, as it may adversely affect the texture of the baked product.

Another conventional product is a frozen cookie dough which is in the form of individual amounts to form single cookies. The amounts are provided by forming dough balls or by cutting the dough into individual pieces. The balls or pieces are then deposited adjacent each other on a tray or other support, and are then frozen. The dough pieces, being tacky before freezing, stick to adjacent pieces and freeze into a solid block. During use, the consumer thaws the block and then separates the individual pieces for baking.

Both of these conventional products require extensive handling of the dough pieces. Further, the consumer is left placing the dough on a baking tray, and may place the dough pieces too close together, resulting in baked products that bake together. Conversely, the consumer may place the dough pieces too far apart, resulting in low yields per batch of baked product, consuming time and energy baking multiple unnecessary batches. Additionally, the conventional products require extensive clean up of baking trays or pans after baking. A consumer may provide separate baking paper to reduce messy clean up time, resulting in increased costs and use of storage space by the consumer. As the preparation, handling, and clean up of ready-to-bake products require extensive time, energy and expense, an improvement on these types of products is needed. The present invention now resolves this need.

US2007/0246460 A1 discloses a construct for supporting food items. The construct comprises a plurality of divider walls and base panels for holding the food items in between those divider walls. The construct can be used in a microwave oven for heating, browning or crisping the enclosed food items.

US2005/0084570 A1 discloses a dough product with integrated baking sheet. Thereby, a ready-to-bake dough is wrapped in a baking sheet. When the dough is unwrapped it can be formed into one or more dough pieces and may be arranged on the baking sheet for baking.

### SUMMARY OF THE INVENTION

The present invention now provides the consumer with a product that requires only a minimum of manipulation, clean up and expense by the consumer. In one aspect, the invention relates to a ready-to-bake food item containment product comprising a plurality of food item portions each containing a sufficient amount of dough to form an individual baked food item product, and a planar sheet of ovenable material initially arranged in a compact configuration for shipment and storage but capable of expanding to an expanded configuration for baking with the compact configuration having a perimeter that is smaller than that of the sheet in the expanded configuration, with the compact configuration including boundaries defining a plurality of locations with each location configured and dimensioned for receiving a single food item portion, wherein the sheet is capable of easily being transformed from the compact configuration to the expanded configuration in which the food item portions are arranged in spaced locations in position for baking into the individual baked food item products without a user having to touch the food item.

In some embodiments, the food item portions are dough portions. If the food item portions are dough portions, in some embodiments, the dough portions are rectangular and the boundaries of the planar sheet in the compact configuration have a height that is at least half the height of the rectangular dough portions.

In some embodiments, the boundaries of the planar sheet are provided by folding or pleating of the sheet and the expanded configuration is obtained by unfolding or unpleating the sheet without removal of the food item portions from the locations they occupy on the sheet.

In some embodiments, folding or pleating is provided along longitudinal and latitudinal planes to form uniformly configured locations for the food item portions such that when the sheet is in the expanded configuration the food item portions are substantially evenly spaced.

In some embodiments the sheet comprises paper, parchment, aluminum foil, a polymer, or a combination thereof.

In some embodiments, the sheet is perforated, scored, etched, or marked linearly to allow a user to remove portions of the sheet and food item portions for baking.

In some embodiments, the boundaries form cavities each of which retain an individual food item portion therein both in the compact and expanded configurations. In some embodiments, the boundaries of the cavities have heights that are greater than the height of the food item portions in the cavities.

In some embodiments, the dough portions are formulated as a sweet dough for making cookies, brownies or muffins, and comprises flour, sugar, a leavening agent and fat.

In some embodiments, the sweet dough further comprises one or more of chocolate, cereal flakes, nuts, oats, raisins, candy pieces, or marshmallows.

In some embodiments, the ready-to-bake food containment product further comprises a package for retaining the compact configured sheet and food item portions.

According to various embodiments, a method for preparing individual food item portions for baking is described. The method comprises providing a plurality of food item portions each containing a sufficient amount of dough to form an individual baked food item product, providing a planar sheet of ovenable material initially arranged in a compact configuration that has a perimeter that is smaller than that of the sheet in a flat planar shape, with the compact configuration including boundaries defining a plurality of locations on the sheet with each location configured and dimensioned for receiving a food item portion; wherein the sheet is capable of being transformed from the compact configuration to a flat planar configuration in which the food item portions are arranged in spaced locations on the sheet in position for baking into the individual baked food item products, and changing the sheet from the compact configuration to the flat planar configuration to arrange the food item portions on the sheet for baking without a user having to touch the food item.

In some embodiments, the food item portions of the method are dough portions. If the food items portions are dough portions, the dough portions may comprise flour, sugar, a leavening agent and fat in some embodiments. A dough portion may comprise flour in an amount from about 10% to about 60% by weight, sugar in an amount from about 10% to about 50% by weight, leavening agent in an amount from about 0.1% to about 3% by weight, and fat in an amount from about 5% to about 35% by weight in some embodiments of the method. In some embodiments of the method, the dough portions are formulated as a sweet dough for making cookies or brownies. In some embodiments, the sweet dough further comprises one or more of chocolate, cereal flakes, nuts, oats, raisins, candy pieces, or marshmallows.

In some embodiments of the method, the dough is in the form parallelpipedal, cylinder, dollop, dough ball, square block, prismatic block or polygon having a thickness of from about 0.5 to about 5 centimeters.

In some embodiments of the method, the dough is deposited on the planar sheet in the compact configuration by extrusion and/or pressing onto the sheet in a quantity sufficient to form an individual baked dough product.

In some embodiments of the method, a consumer places the sheet in a baking pan, changes the sheet from the compact configuration to the flat planar configuration to increase the distance between the food item portions; and places the baking pan, sheet, and food item portions into an oven heated to a baking temperature for a sufficient time to prepare a baked food item product when fresh baked food item products are desired.

Furthermore, disclosed is a method for making a ready-to-bake dough containment product which comprises providing a plurality of dough portions each containing a sufficient amount of dough to form an individual baked dough product initially configuring a planar sheet in a compact configuration and transforming the compact configuration to an expanded configuration for baking of the dough portions wherein the compact configuration has a perimeter that is smaller than that of the sheet in the expanded configuration, with the compact configuration including boundaries defining a plurality of locations on the sheet with each location configured and dimensioned for receiving a single dough portion and wherein in the expanded configuration the dough portions are arranged in spaced locations on the sheet in position for baking into the individual baked dough products.

In some embodiments of the method initially configuring the planar sheet into the compact configuration comprises folding or pleating the sheet. In some embodiments of the method, the folding or pleating of the sheet forms the boundaries of the planar sheet in the compact configuration.

In some embodiments of the method, the boundaries are formed into cavities for each retaining an individual dough portion therein both in the compact and expanded configurations.

In some embodiments of the method, pressing the sheet into a mold forms the boundaries of the planar sheet in the compact configuration.

In some embodiments of the method, the method further comprises perforating, scoring, etching, linearly marking, or combinations thereof, the planar sheet to allow a user to remove portions of the sheet and dough portions for baking.

In some embodiments of the method, the sheet comprises paper, parchment, aluminum foil, a polymer, or a combination thereof.

In some embodiments of the method, the method further comprises providing a package for retaining the compact shape sheet and dough portions. In some embodiments of the method, the method further comprises flow wrapping the compact shape sheet and dough portions.

Still furthermore disclosed is a use of a planar sheet of ovenable material for holding and baking individual food item portions is described. The use is characterized in that the planar sheet is initially arranged in a compact configuration for shipment and storage but is capable of expanding to an expanded configuration for baking with the compact configuration having a perimeter that is smaller than that of the sheet in the expanded configuration, with the compact configuration including boundaries defining a plurality of locations with each location configured and dimensioned for receiving a single food item portion; wherein the sheet is capable of easily being transformed from the compact configuration to the expanded configuration in which the food item portions are arranged in spaced locations in position for baking into the individual baked food item products.

### BRIEF DESCRIPTION OF THE DRAWINGS

Preferred embodiments of the invention, specifically in the form of an ovenable sheet can be observed by reviewing the following detailed description and appended drawing figures, wherein:
FIG. 1A is a cross-sectional view of a food item containment product in accordance with a first embodiment of the invention;
FIG. 1B is an elevational view of the food item containment product in a compact configuration according to FIG. 1A;
FIG. 1C is an elevational view of the food item containment product in an expanded configuration according to FIG. 1A;
FIG. 2 is a schematic of a food item containment product in accordance with the invention;
FIG. 3 is a schematic of a food item containment product in accordance with another embodiment of the invention;
FIG. 4 is a schematic of a food item containment product in accordance with another embodiment of the invention; and
FIG. 5 is a schematic of a food item containment product in accordance with another embodiment of the invention.

### DETAILED DESCRIPTION OF THE INVENTION

The present invention relates to a consumer-friendly, ready-to-bake food item containment product comprising a food item disposed on a planar sheet of ovenable material, wherein the sheet initially has a compact configuration for shipping and storage that is capable of being transformed to an expanded configuration in which the food item portions are arranged in spaced locations on the sheet in position for baking into the individual baked food item products. The compact configuration may include boundaries defining a plurality of locations on the sheet with each location configured and dimensioned for receiving a single dough portion. The ready-to-bake food item containment product requires only a minimal amount of manipulation during use, allowing the direct transfer of the containment product to the baking sheet. The ready-to-bake food item containment product eliminates the need for the consumer to directly handle the food item portions, and provides the optimum spacing for the food item to ensure maximum yields while reducing imperfections in baking due to over-crowding. Additionally, the ready-to-bake food item containment product reduces time, energy and expense of clean up, as the food item is baked directly on the disposable sheet, that can be conveniently thrown away after use.

The present invention relates to a ready-to-bake food item containment product having multiple food item portions disposed on an ovenable sheet. This product is typically provided under refrigerated or frozen conditions, is purchased that way by the consumer, and then is removed from the refrigerator, thawed if necessary, and the ovenable sheet with the multiple food item portions is then deposited directly onto a pan or into a baking tin for baking. The food item containment product sheet is initially configured in a compact configuration for shipping and storage that has a perimeter that is smaller than that of the sheet in an expanded configuration and can be transformed from the compact configuration to the expanded configuration in which the food item portions are arranged in spaced locations on the sheet in position for baking into the individual baked food items.

The term "ovenable" refers to a composition or material that will not burn or scorch at temperatures upwards of about 260° Celsius (about 500° Fahrenheit). Ovenable materials may be able to withstand cooking in conventional ovens, convection ovens, and/or microwave ovens.

The term "baking tray" refers to a flat receptacle used for supporting a product to be baked in the oven. The baking tray may have a raised edge or rim, or may be flat without a raised edge or rim. The baking tray may be a single layer, or multiple layers. The baking tray may be made out of any rigid, oven-safe suitable material, including but not limited to metal (aluminum, stainless steel, etc.), stone, ceramic, polymers, plastics, or any combination thereof. The baking tray must be able to withstand baking temperatures upwards of about 260° Celsius (about 500° Fahrenheit). The baking tray may have a smooth or textured surface.

The term "food item" is used to mean any pre-prepared food items suitable for baking. The food item may be, but is not limited to, appetizers, entrees, or dessert-type food items. Examples of a food item may be items such as mini-quiches, spanakopeta, pigs-in-a-blanket, stuffed tomatoes, stuffed peppers, mini-pizzas, pot pies, chicken wings, chicken tenders, chicken nuggets, pierogies, ravioli, meatballs, doughs, cookies, pastries, buns, rolls, etc.

The term "bakery dough" is used to mean pre-mixed doughs of the types used for making bakery items where the dough is provided in the form of a sufficiently solid or semi-solid block, while the term "sweet dough" refers to a dough that contains at least 0.5% by weight of sugar or an artificial sweetener such as saccharine or NUTRASWEET®. The dough includes a number of different embodiments, one of which is exemplified by a cookie dough. It is to be understood that the invention is applicable to other products of similar sweet doughs, such as brownies, muffins, turnovers, doughnuts, cakes or other pastries.

A preferable ready-for-use dough is typically prepared from flour, sugar, a leavening agent, and a fat. The following description refers to a containment product for ready-to-use dough as an example only. However, it should be understood that the description of the containment product can be extended to any food item.

Any conventional leavening agent can be utilized depending upon the final product and its desired characteristics. One common leavening agent is baking powder, and this is advantageous for preparing doughs which flow when baked. This agent at least in part contributes to the ability of the dough pieces to flow into a round bakery product, such as a cookie, during baking. As used herein, "baking powder" means a mixture of at least one bicarbonate or carbonate salt, at least one acidifying agent and at least one separating agent. These ingredients and adequate substitutes are commonly known to one of ordinary skill in the art, therefore, any known ingredient or substitute can be used with the invention. Preferably, sodium bicarbonate is used with sodium diphosphate or disodium dihydrogen pyrophosphate and a starch as a separating agent. These mixtures are directly available commercially with a fixed composition.

Other conventional leavening agents can be used, including phosphates such as disodium dihydrogen pyrophosphate.

These agents are typically used in an amount of about 0.1% to about 3% by weight. The amount and type of leavening agent can be selected to provide the dough pieces with the ability to retain their original shape during baking so that square, triangular or other shapes can be substantially retained in the final baked product. For certain products, the leavening agent may be omitted.

Any type of flour can be used. Typically, the flour can be a cereal flour with a high or low protein content. The flour content of the sweet dough is normally from about 10% to about 60%, preferably from about 20% to about 40% and more preferably from about 27% to about 34% by weight.

The sugar that is used can be of any type. Sugars include, but are not limited to, fructose, sucrose, dextrose, corn syrup, glucose, lactose, galactose, or mixtures thereof. Typically, a sugar is present in an amount from about 10% to about 50% by weight.

Preferably, sucrose is used, in the form of granulated sugar. To increase dough sweetness, a sugar substitute such as sorbitol, saccharine or any other known sugar substitute can be added either in conjunction with sugar or as a substitute for the sugar. Advantageously, sucrose helps preserve the dough during refrigeration, *i.e.,* sucrose allows the dough to be somewhat hard, yet spread well during baking to form the desired shape.

The dough should have a moisture content from about 2% to about 25%, preferably from about 8% to about 22%, and more preferably about 12% to about 16% by weight.

The type of fat has an influence on the flow capacity of the dough during baking. The fat used in the dough composition according to the invention can be a solid or liquid fat at room temperature. The fat can be of animal or plant origin, such as, lard, tallow, butter oil, butter, margarine, corn oil, copra oil, palm oil, sunflower oil, safflower oil, canola oil, soya bean oil, coconut oil, palm kernel oil, cotton oil, peanut oil, olive oil, or mixtures thereof. The fats can be emulsified or stabilized with mono- or diglycerides or other emulsifiers known in the art. For example, margarine, which already contains an emulsifier, can be used. Typically, a fat is present in an amount from about 5% to about 35%, preferably in an amount from about 10% to about 25% by weight.

Optionally, a texturing agent can be included. One of ordinary skill in the art can determine the appropriate texturing agent with little or no experimentation. A preferred texturing agent is whole egg or egg white, liquid or dried egg powder or any egg substitute. Typically, a texturing agent is used in an amount of about 0.5% to about 10% by weight.

The dough according to the invention may also contain natural or artificial flavoring agents, including but not limited to, vanilla flavor, cinnamon, ginger, cocoa powder, fruit flavor, nut flavor (e.g., peanut butter or peanut flour), and the like. These are typically used in an amount of about to 0.01% to about 8% by weight, preferably from 0.25% to 7% by weight. Of course, various combinations of these flavoring agents are possible, as desired.

Optionally, the dough may contain inclusions. Inclusions include, but are not limited to, chocolate pieces, cereal flakes, oat flake pieces, raisins, fruit pieces, whole nuts or nut pieces, *i.e.,* groundnuts, hazelnuts, peanuts, cashews, pecans, walnuts or other nuts, caramel, candy pieces, marshmallows or various mixtures thereof. The inclusions can be of any edible size, and are typically from about 1 mm to about 25 mm, preferably from about 4 mm to about 10 mm. The amount of inclusions is not critical and can vary from 1 to 30% by weight. Optionally, dark chocolate, milk chocolate, white chocolate, compound coatings or mixtures thereof may be used in the form of morsels, pellets or chunks. Typically, chocolate is present in an amount from about 5% to about 50%, and preferably in an amount from about 10% to about 30% by weight.

The dough is pre-formed into shapes to assist in the preparation and baking of the product. The dough may be pre-formed as a sphere, parallelpipedal, cylinder, dollop, dough ball, square block, prismatic block or polygon.

According to the invention, the dough is sufficiently thick to form a cookie or other bakery product of edible size upon baking. This feature avoids further dough handling or manipulation either by scooping, rolling or folding the dough. Typically, the dough portions have a thickness of from about 0.5 cm to about 5 cm, and preferably from about 1 cm to about 3 cm.

If the dough is shaped into parallelepipedal blocks, the blocks typically have a size from about 1 cm to about 5 cm, preferably from about 3 cm to about 4 cm and with a thickness from about 1 cm to about 5 cm, preferably from about 1 cm to about 3 cm. If the dough is shaped into a disk or cylinder, the cylinder typically has a diameter from about 2 cm to about 8 cm, preferably from about 1 cm to about 3 cm. If the dough is shaped into a prismatic block, typically, the prismatic block has a thickness from about 1 cm to about 3 cm and a triangle with sides measuring from about 2 cm to about 8 cm, preferably from about 3 cm to about 6 cm.

This dough can be preserved in the refrigerator or freezer as a ready-for-use refrigerated or frozen dough product.

The dough portions may have at least two different layers. The number of layers is not critical, but from a practical point of view, the number of layers is typically between 2 and 6. Preferably, the number of layers is 2. These layers are more specifically of different compositions. This can be done, for example, by adding to the basic dough different types of flavors or colors, which are accepted in the food industry. For example, it is possible to have the basic dough as first layer and dough added with cocoa as the second layer, wherein the resultant cookie has both a clear face and a dark face. The way for producing this layered dough can be either by extrusion, sheeting or by other ways which are known in the art.

The dough portions within a containment product may be all the same composition. In an alternate embodiment, the dough portions may be of different compositions. For example, the dough containment product may include all chocolate chip cookie dough portions. Alternatively, the dough containment product may contain a mixture of chocolate chip cookie portions and oatmeal raisin cookie portions. The way for producing different dough portions within the same dough containment product can be the same as for the layers, i.e., by extrusion, sheeting or other ways that are known in the art. Also, the dough portions of the same composition can be deposited adjacent to each other either horizontally or vertically in the containment product.

Additionally, the dough portions may be stamped on the top with a recognizable design or image, for example an animal or a geometric shape. In this case, a known stamping device is used for creating an indentation on the top of the pieces. The dough can be a classical dough in its composition since the ornamentation is visible on the top face of the cookie.

Further, the dough portions may receive a decoration on the top face. This decoration can be either precisely placed or randomly put on the tops of the dough portions. The possible decorations are seeds, for example sesame seeds, an icing, sugar balls, non-pariels or other decorations. The way to put the decoration on the top of the dough portions can be either by a sprinkling device or by manual, robotic or mechanical means, all of which are known generally in the art.

The dough portions may also have a filling for each piece, which filling is different from the basic dough. This filling could be either a creamy or a liquid filling. This filling can be a sugar based confection such as caramel, chocolate, or a fruit or cream gel or viscous fluid. The filling can be also a solid filling, such as chocolate, a flavored dough or another aromatized dough. In the case of a liquid filling, it is so calculated that the filling remains inside the basic dough after cooking. The amount of the filling is not critical; it can represent from about 5% to about 50% of the piece of dough. The shape of the filling is also not critical. In addition, it is possible for the dough to break during baking so that the filling can exude onto the baked dough. The way of producing a dough portion with filling includes by coextrusion, by injection, or by placing the filling on a first dough layer and then putting a second dough layer upon the filling and first dough layer, in a manner similar to the way that ravioli is made.

Multiple dough portions are disposed in and/or on a planar sheet of ovenable material that facilitates the shipment and storage, but further facilitates the separation, spacing, and baking of the dough units directly on the planar sheet.

The sheet may have a compact configuration and an expanded configuration. The compact configuration may have a perimeter that is smaller than the perimeter in the expanded configuration. The compact configuration may be formed by folding, pleating, crimping, etc. of the sheet. The compact configuration may be formed using a combination of methods, including puncture and fold (i.e. a "staple-less staple"), or folding and the use of adhesive. The folding, pleating, crimping, etc. of the sheet may define boundaries defining locations for placement of the dough portions. The boundaries may be walls, dividers, panels, troughs, cavities or recesses that are formed by the folding, pleating, crimping, etc. of the sheet. The height of the walls or dividers may be less than, equal to, or greater than the height of the dough portions. If the boundaries are walls, dividers or panels, then preferably the boundaries are at least half the height of the dough portions. The depth of the troughs, cavities or recesses may be less than, equal to, or greater than the height of the dough portions. If the boundaries are troughs, cavities or recesses, then preferably, the boundaries are at least half the height of the dough portions, and more preferably, greater than the height of the dough portions.

The planar sheet may have a length "L," width "W," radius "R," or height "H" in either the compact or expanded configuration. The planar sheet may have any two-dimensional or three-dimensional geometric shape, in either the compact or the expanded configuration. The geometric shape may be defined by the perimeter of the planar sheet, or by the perimeter and height (or depth) of the planar sheet. For example, the planar sheet may be, without limitation, square, rectangular, circular, triangular, oval, trapezoidal, cube, cuboidal, conical, pyramidal, cylindrical, etc., in shape. Preferably the planar sheet is square or rectangular in shape. Generally, the expanded configuration will be a two-dimensional geometric shape, and the compact configuration will have a three-dimensional geometric shape. Further, the planar sheet may have one shape in the compact configuration, and a separate, distinct shape in the expanded configuration. For example, the sheet may be a square in the compact configuration, but a rectangle when transformed into the expanded configuration. Alternatively, the sheet may have a cuboidal shape in the compact configuration, but a rectangular shape when transformed into the expanded configuration.

The folds or pleats of the sheet may occur over the longitudinal and/or the latitudinal planes of the sheet. The folds or pleats may cover the entire longitudinal or latitudinal planes, or portions of the latitudinal planes. There may be, without limitation, one, two, three, four, five, or more folds over the longitudinal plane of the sheet. There may be, without limitation, one, two, three, four, five, or more folds over the latitudinal plane of the sheet. Preferably, there may be at least four folds or pleats in the longitudinal plane, and at least four folds or pleats in the latitudinal plane of the sheet.

The sheet may be made of any suitable food-safe material. In some embodiments, the sheet is made of heat-reflective, non-stick, thermo-conductive, or moisture resistance material. The sheet may be made of, without limitation, paper (waxed or nonwaxed), parchment, cardboard, paper board, aluminum foil (conventional or heavy gauge), tin, polymers, thermoplastics (i.e., crystallized polyethylene terephthalate (CPET), polypropylene, polyvinylchloride, acrylonitrile butadiene styrene, polycarbonate, polystyrene etc., such as those described in U.S. Patent Publication No. 2006/0257606) or a combination thereof. The sheet may be laminated with appropriate suitable food-safe adhesives. The sheet may be composed of a single layer or multiple layers of materials. For example, the sheet may be formed of a paper layer and a metallic layer with a layer of adhesive between the paper an metallic layer.

In some embodiments, the sheet is coated with a nonstick material, such as silicon, or a heat reflective material, such as aluminum. In some embodiments, all or a portion of the sheet is textured or embossed, which reduces the surface area contacted between the dough product and the sheet, facilitating easy removal of the cooked dough product after baking.

The sheet may be a solid sheet, or may include holes or cutouts. Holes or cutouts may advantageously aid in the folding or pleating of the sheet in order to produce the compact configuration. Alternatively, the holes or cutouts may advantageously aid in heat transfer through the sheet. Additionally, the sheet may be perforated, scored, etched, or marked linearly, to allow a user to remove a single dough portion, or a section of dough portions from the sheet for baking. Thus, the user does not have to bake the entire sheet at once, but can bake smaller portions if desired. Alternatively, the perforations, scores, etchings, or linear markings advantageously aid in the folding or pleating of the sheet in order to produce the compact configuration. The perforations, scores, etchings, or linear markings may only penetrate a portion of the sheet without penetrating the entirety of the sheet. The sheet may be formed of a single sheet or may be formed of several smaller sheets that are bound together.

The sheet can be of any suitable thickness or caliper, including, but not limited to, about 0,00254 to about 1,905 mm (about 0.0001 to about 0.075 inches) thick. The thickness of the sheet can be calculated based off of a single layer sheet, or multiple layers if combinations of materials are used to form the sheet. For example, if the sheet includes aluminum, the aluminum can be from about 0.0002 to about 0.005 inches thick, or from about 0,00762 (0.0003) to about 0,1016 mm (0.004 inches) thick. If the sheet includes parchment paper, the thickness can be from about 0.0254 mm (0.001 inches) to about 0,254 mm (0.01 inches), or from about 0,0399 mm (0.00157 inches) to about 0,1499 mm (0.0059 inches) thick. If the sheet includes paperboard, the paperboard can be from about 0,254 mm (0.01 inches) to about 1,27 mm (0.050 inches) thick, or from about 0,356 mm (0.014 inches) to about 0,61 mm (0.024 inches) thick.

Alternatively, the sheet can be any suitable basis weight (i.e. the designated weight of 500 sheets of the sheet, measured in pounds based on the sheet size), and can range from aboutl 6,8 (15) to about 45,4 kg (100 pounds) per basis ream of 500 sheets, including , but not limited to, about 6,0, 9,7, 11,3, 13,6, 15,9, 10,1, 20,4, 22,7, 24,9, 27,2, 29,5, 31,0, 34,2, 36,3, 38,6, 40,8, 43,9 or 45,4 kg (15, 20, 25, 30, 35, 40, 50, 55, 60, 65, 70, 75, 80, 85, 90, 95, or 100 pounds) per basis ream of 500 sheets. If the sheet includes parchment paper, the basis weight can be from about a 9,7 kg (20 pound) basis weight to about a 40,8 kg (90 pound) basis weight, or from about a 11,3 kg (25 pound) to about a 27,7 kg (61 pound) basis weight, based on a 61 × 91,4 cm (24 x 36 inch) ream basis. If the sheet includes paperboard, the basis weight can be from about 13,6 kg (30 pounds) to about 40,8 kg (90 pounds), or from about 24,5 kg (54 pounds) to about 37,7 kg (83 pounds), based on kg/92,9 m² (pounds/100 square feet).

Alternatively, the sheet can be any suitable density. For example, the sheet may be from about 80 gram per square meter (gsm) to about 20 gsm. Preferably, the sheet is about 40 gsm. Regardless, the material must be strong enough to hold the compact configuration for removal from the packaging. The containment product may be slid out of the packaging directly onto a baking tray. Alternatively, the containment product may be sturdy enough to be slid out of the packaging and carried to the baking tray.

As mentioned above, the sheet is initially arranged in a compact configuration for shipment and storage but capable of transforming to an expanded configuration for baking. The unfolding or unpleating of the sheet transforms the compact configuration into the expanded configuration. Advantageously, the dough portions are retained on the sheet during the transformation from the compact configuration into the expanded configuration, which substantially evenly spaces the dough portions for uniform baking. The dough portions may be retained on the sheet by the stickiness and weight of the dough. Alternatively, the dough portions may be retained on the sheet with the aid of a food adhesive, such as sugar based adhesives (i.e., maltodextrin) or egg-wash based adhesives.

The dough portions may be deposited on the sheet after the folding or pleating of the sheet into the compact configuration. Alternatively, the dough portions may be deposited on the sheet before the folding or pleating of the sheet into the compact configuration. Preferably, the sheet is folded into the compact configuration, and the dough portions are subsequently disposed on the sheet via standard manufacturing techniques, including, but not limited to, extrusion, gravity, conveyors, etc, or combinations thereof. The dough portions may be disposed on the sheet automatically or manually.

The dough portions and containment product may be baked in a conventional, convection, or microwave oven. If baked in a microwave, the ovenable material may contain an active microwave energy heating element, such as a susceptor material, which provides heating, crisping, or surface browning of the dough portions. The susceptor material may be included to provide optimal heat distribution during microwave baking of the dough product so that when the dough product and susceptor material are subjected to microwaves, the dough product exhibits controlled spreading onto the susceptor material during microwave baking to achieve a final baked product. In one embodiment, the susceptor material is at least partially in contact with the dough portions and is configured to provide optimal heat distribution during microwave baking of the dough formulation. The susceptor material is generally provided in the shape of a tube, disk, box, bowl, or cone and has at least one surface in direct contact with the dough product for providing even heating, crisping, or surface browning of the dough formulation to prepare a baked product. The susceptor material may have a surface or cavity which has a shape that corresponds at least partially to that of the baked product in contact therewith and the dough formulation spreads onto, into or throughout the cavity during microwave baking before achieving the final baked product. Preferably, the susceptor is a patterned susceptor to direct heat for proper baking of the dough portions. The susceptor material may include a stiff material, such as paper board that includes a metal surface, such as aluminum on one side to assist in focusing the microwaves on the dough portions.

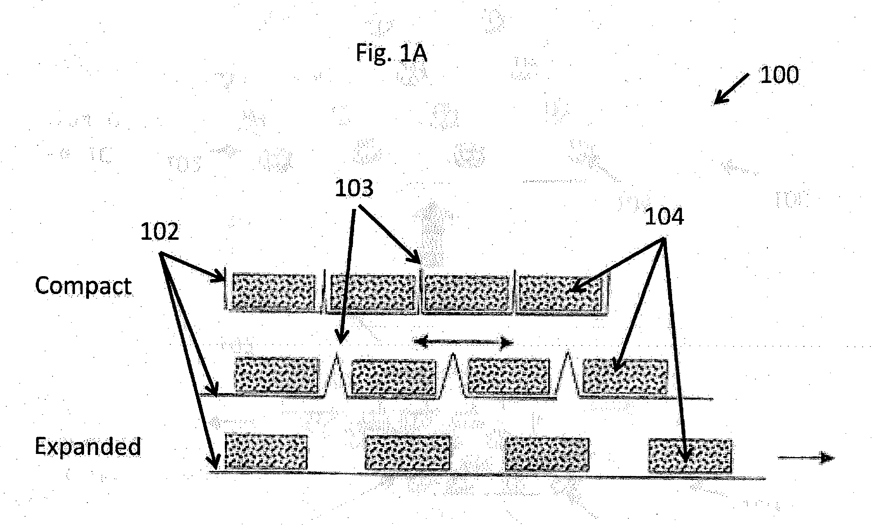

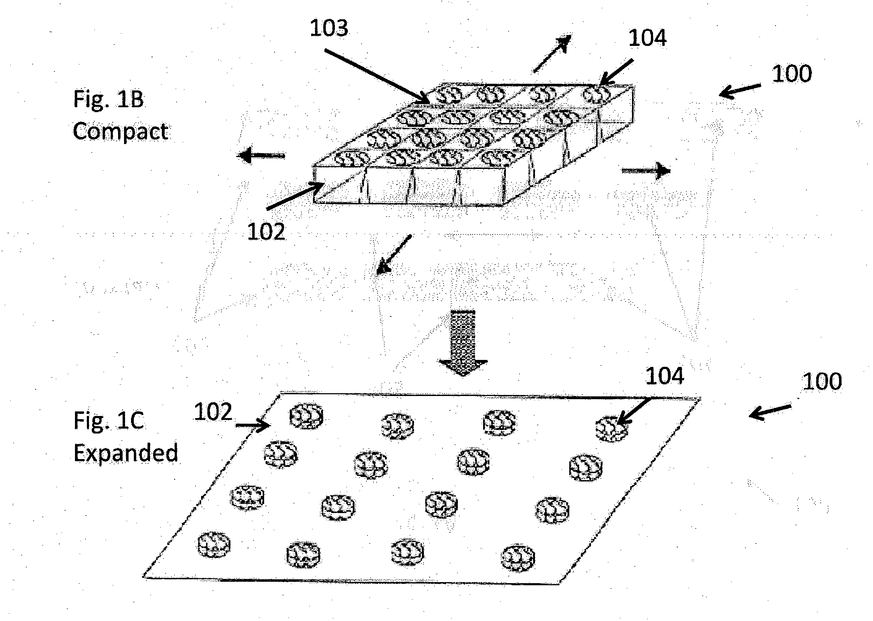

FIGs. 1A-C illustrate a food item containment product 100 in accordance with one embodiment of the invention, wherein expandable sheet 102 is in a compact position (FIG. 1B) and is transformed into an expanded configuration (FIG. 1C) by unfolding expandable sheet 102. In this embodiment, food items 104 are disposed on expandable sheet 102, and remain adhered to sheet 102 during transformation. Folds 103 of the expandable sheet in the compact configuration provide boundaries between food items 104 preventing food items from touching during transport, and may be removed when expandable sheet 102 is transformed into the expanded configuration.

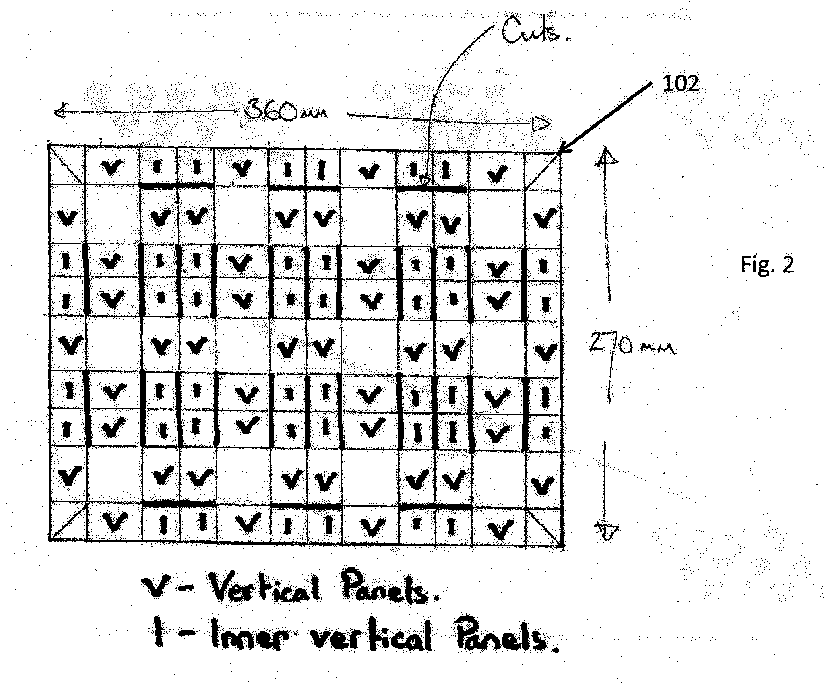

FIG. 2 is a schematic of an expandable sheet 102 prior to folding. This embodiment shows the pattern for folding expandable sheet 102 prior to the placement of a food item. The reference "V" represents the portions of expandable sheet 102 which transform into vertical panels that generally are directly adjacent to a deposited food item. The reference "I" represents the portions of expandable sheet 102 which transform into inner vertical panels, that generally are not adjacent to a deposited food item. Heavy lines represent cuts or holes in expandable sheet which aid in folding and/or heat transfer during baking.

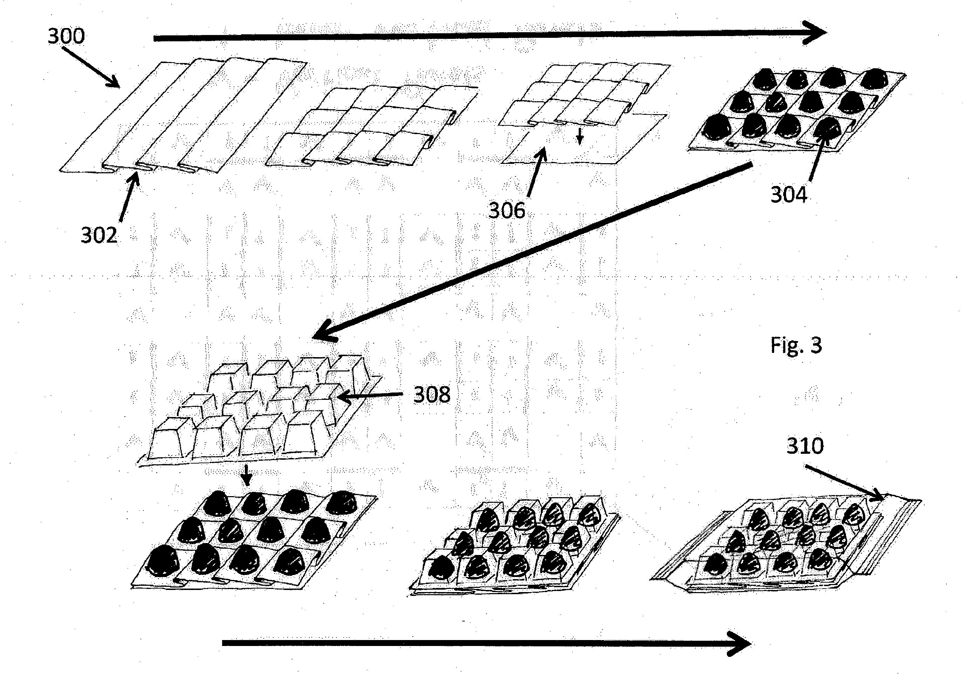

FIG. 3 is a schematic of a food item containment product 300 in accordance with another embodiment of the invention, wherein expandable sheet 302 is in a compact position and is transformed into an expanded configuration by unpleating expandable sheet 302. In this embodiment, food items 304 are disposed on expandable sheet 302, and remain adhered to sheet 302 during transformation. Folds of the expandable sheet in the compact configuration provide boundaries between food items 304 preventing food items from touching during transport, and may be removed when expandable sheet 302 is transformed into the expanded configuration. A support tray 306 may be included to provide structural support for expandable sheet 302. A vacuum form 308 may be deposited over expandable sheet 302 and food items 304 to protect the contents during shipping and transport. Finally, assembled expandable sheet 302, food items 304, support tray 306, and vacuum form 308 may be flow wrapped 310 and prepared for shipping and transport.

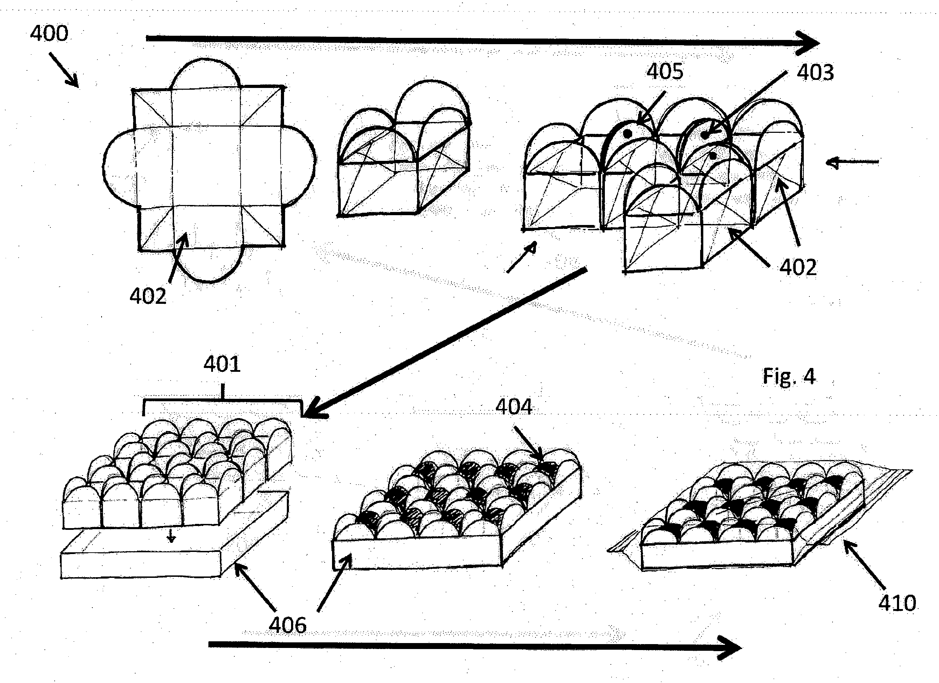

FIG. 4 is a schematic of a food item containment product 400 in accordance with another embodiment of the invention, wherein the containment product is assembled from multiple individual folded expandable forms 402. In this embodiment, multiple individual folded expandable sheets 402 are first folded into individual compact forms, and then assembled together to form a larger, expandable sheet 401. The individual compact folded forms 402 may be held together via adhesive 405 deposited between individual folded expandable forms 402.

In this embodiment, expandable sheet 401 is in a compact position and is transformed into an expanded configuration by unfolding expandable sheet 401. The unfolding of expandable sheet 401 may not cause the separation of the multiple individual folded expandable forms 402. Alternatively, unfolding of expandable sheet 401 may separate and detach multiple individual folded expandable forms 402 in order to allow the user to bake only a portion of food items 404 or alter the spacing between the food items 404 as desired.

In this embodiment, food items 404 are disposed on individual folded expandable forms 402, and remain adhered to forms 402 during transformation. Folds 403 of the individual folded expandable forms in the compact configuration provide boundaries between food items 404 preventing food items from touching during transport, and may be removed when expandable sheet 401 is transformed into the expanded configuration. A support tray 406 may be included to provide structural support for expandable sheet 401. Finally, assembled expandable sheet 401, food items 404, and support tray 406 may be flow wrapped 410 and prepared for shipping and transport.

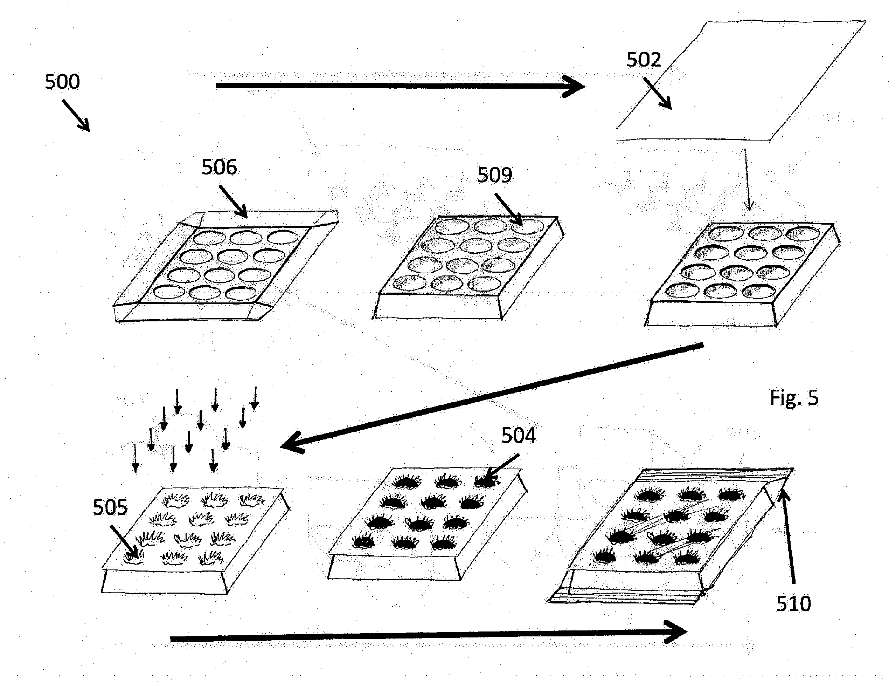

FIG. 5 is a schematic of a food item containment product 500 in accordance with another embodiment of the invention, wherein expandable sheet 502 is in a compact position and is transformed into an expanded configuration by extension of the expandable sheet 502. In this embodiment, a raised support tray 506 with recesses or holes 509 may be included to provide structural support for expandable sheet 502. Expandable sheet 502 is deposited over raised support tray 506 and vacuums pressure sucks the expandable sheet 502 into recesses or holes 509 of support tray 506. Food items 504 are disposed on expandable sheet 502, and remain adhered to sheet 502 during transformation. Recesses 505 formed by folding or crimping of the expandable sheet 502 in the compact configuration provide boundaries between food items 504 preventing food items from touching during transport, and may be removed when expandable sheet 502 is transformed into the expanded configuration. Finally, assembled expandable sheet 502, food items 504, and support tray 506 may be flow wrapped 510 and prepared for shipping and transport.

Features described in the embodiments of the present invention can be combined, separated, interchanged, and/or rearranged to generate other embodiments. Therefore, it will be understood that the appended claims are intended to cover all such embodiments.

## Claims

1. A ready-to-bake food item containment product (100) comprising:
a plurality of food item portions (104) each containing a sufficient amount of dough to form an individual baked food item product; and
a planar sheet (102) of ovenable material initially arranged in a compact configuration for shipment and storage but capable of expanding to an expanded configuration for baking with the compact configuration having a perimeter that is smaller than that of the sheet (102) in the expanded configuration, with the compact configuration including boundaries defining a plurality of locations with each location configured and dimensioned for receiving a single food item portion (104);
wherein the sheet (102) is capable of easily being transformed from the compact configuration to the expanded configuration in which the food item portions (104) are arranged in spaced locations in position for baking into the individual baked food item products without a user having to touch the food item.

2. The product of claim 1, wherein the food item portions (104) are dough portions.

3. The product of claim 2, wherein the dough portions are rectangular and the boundaries of the planar sheet (102) in the compact configuration have a height that is at least half the height of the rectangular dough portions.

4. The product of claim 1, wherein the boundaries of the planar sheet (102) are provided by folding or pleating of the sheet (102) and the expanded configuration is obtained by unfolding or unpleating the sheet (102) without removal of the food item portions (104) from the locations they occupy on the sheet (102).

5. The product of claim 4, wherein folding or pleating is provided along longitudinal and latitudinal planes to form uniformly configured locations for the food item portions (104) such that when the sheet (102) is in the expanded configuration the food item portions (104) are substantially evenly spaced.

6. The product of claim 1, wherein the sheet (102) comprises paper, paperboard, laminate, parchment, aluminum foil, a polymer, or a combination thereof.

7. The product of claim 1, further comprising a susceptor.

8. The product of claim 1, wherein the sheet (102) is perforated, scored, etched, or marked linearly to allow a user to remove portions of the sheet (102) and food item portions (104) for baking.

9. The product of claim 1, wherein the boundaries form cavities each of which retain an individual food item portion (104) therein.

10. The product of claim 9, wherein the boundaries of the cavities have heights that are greater than the height of the food item portions (104) in the cavities.

11. A method for preparing individual food item portions (104) for baking which comprises:
providing a plurality of food item portions (104) each containing a sufficient amount of dough to form an individual baked food item product;
providing a planar sheet (102) of ovenable material initially arranged in a compact configuration that has a perimeter that is smaller than that of the sheet (102) in a flat planar shape, with the compact configuration including boundaries defining a plurality of locations on the sheet (102) with each location configured and dimensioned for receiving a food item portion (104); wherein the sheet (102) is capable of being transformed from the compact configuration to a flat planar configuration in which the food item portions (104) are arranged in spaced locations on the sheet (102) in position for baking into the individual baked food item products; and
changing the sheet (102) from the compact configuration to the flat planar configuration to arrange the food item portions (104) on the sheet (102) for baking without a user having to touch the food item.

12. The method of claim 11, wherein the food item portions (104) are dough portions.

13. The method of claim 12, wherein the dough portions are formulated as a sweet dough for making cookies or brownies.

14. The method of claim 13, wherein the sweet dough further comprises one or more of chocolate, cereal flakes, nuts, oats, raisins, candy pieces, or marshmallows.

15. The method of claim 12, wherein the dough is deposited on the planar sheet (102) in the compact configuration by extrusion and/or pressing onto the sheet (102) in a quantity sufficient to form an individual baked dough product.

## Patentansprüche

1. Umschließungsprodukt für backfertige Lebensmittelartikel (100) mit:
mehreren Lebensmittelartikelportionen (104), welche jeweils eine ausreichende Menge an Teig enthalten, um ein einzelnes gebackenes Lebensmittelprodukt auszubilden; sowie
eine flächige Platte (102) aus ofenfestem Material, die zunächst in einer kompakten Konfiguration zum Transport und zur Lagerung angeordnet ist, die sich aber in eine erweiterte Konfiguration zum Backen ausdehnen kann, wobei die kompakte Konfiguration einen geringeren Umfang als den der Platte (102) in der erweiterten Konfiguration aufweist, wobei die kompakte Konfiguration Begrenzungen aufweist, die eine Vielzahl von Aufnahmen umfasst, wobei jede Aufnahme zum Aufnehmen einer einzelnen Lebensmittelportion (104) ausgeführt und dimensioniert ist;
wobei die Platte (102) problemlos aus der kompakten Konfiguration in die erweiterte Konfiguration überführt werden kann, in der die Lebensmittelportionen (104) in beabstandeten Aufnahmen in der Position zur Herstellung der einzelnen gebackenen Lebensmittelprodukten durch Backen angeordnet sind, ohne dass ein Benutzer den Lebensmittelartikel berühren muss.

2. Produkt gemäß Anspruch 1, wobei die Lebensmittelportionen (104) aus Teigportionen bestehen.

3. Produkt gemäß Anspruch 2, wobei die Teigportionen rechteckig sind und die Begrenzungen der flächigen Platte (102) in der kompakten Konfiguration eine Höhe aufweisen, die mindestens der Hälfte der Höhe der rechteckigen Teigportionen entspricht.

4. Produkt gemäß Anspruch 1, wobei die Begrenzungen der flächigen Platte (102) durch Zusammenklappen oder Falten der Platte (102) hergestellt werden und die erweiterte Konfiguration durch Aufklappen oder Auseinanderfalten der Platte (102) erhalten wird, ohne dass die Lebensmittelportionen (104) aus den Aufnahmen entnommen werden, die sie auf der Platte (102) einnehmen.

5. Produkt gemäß Anspruch 4, wobei das Zusammenklappen oder Falten entlang Längs- und Querebenen vorgesehen ist, um gleichmäßig ausgebildete Aufnahmen für die Lebensmittelportionen (104) derart auszubilden, dass, wenn sich die Platte (102) in der erweiterten Konfiguration befindet, die Lebensmittelportionen (104) im Wesentlichen gleichmäßig voneinander beabstandet sind.

6. Produkt gemäß Anspruch 1, wobei die Platte (102) Papier, Pappe, Laminat, Backpapier, Aluminiumfolie, ein Polymer oder eine Kombination aus diesen umfasst.

7. Produkt gemäß Anspruch 1, weiterhin mit einem Suszeptor.

8. Produkt gemäß Anspruch 1, wobei die Platte (102) perforiert, gerieft, herausgeätzt oder geradlinig markiert ist, so dass der Benutzer Abschnitte der Platte (102) und Lebensmittelportionen (104) zum Backen entfernen kann.

9. Produkt gemäß Anspruch 1, wobei die Begrenzungen Hohlräume ausbilden, welche jeweils eine einzelne Lebensmittelportion (104) darin aufnehmen.

10. Produkt gemäß Anspruch 9, wobei die Begrenzungen der Hohlräume Höhen aufweisen, die größer als die Höhe der Lebensmittelportionen (104) in den Hohlräumen sind.

11. Verfahren zur Zubereitung von einzelnen Lebensmittelportionen (104) zum Backen, mit den Schritten:
Bereitstellen von mehreren Lebensmittelportionen (104), welche jeweils eine ausreichende Menge an Teig enthalten, um ein einzelnes gebackenes Lebensmittelprodukt auszubilden;
Bereitstellen einer flächigen Platte (102) aus ofenfestem Material, die zunächst in einer kompakten Konfiguration angeordnet ist, welche einen geringeren Umfang als den der Platte (102) in einer ebenen, flächigen Form aufweist, wobei die kompakte Konfiguration Begrenzungen aufweist, welche eine Vielzahl von Aufnahmen auf der Platte (102) definieren, wobei jede Aufnahme zur Aufnehmen einer Lebensmittelportion (104) ausgeführt und dimensioniert ist; wobei die Platte (102) aus der kompakten Konfiguration in eine ebene, flächige Konfiguration überführt werden kann, in der die Lebensmittelportionen (104) in beabstandeten Aufnahmen auf der Platte (102) in der Position zur Herstellung von einzelnen gebackenen Lebensmittelprodukten durch Backen angeordnet sind; und
Umwandeln der Platte (102) von der kompakten Konfiguration in die ebene, flächige Konfiguration, um die Lebensmittelportionen (104) auf der Platte (102) zum Backen anzuordnen, ohne dass ein Benutzer den Lebensmittelartikel berühren muss.

12. Verfahren gemäß Anspruch 11, wobei die Lebensmittelportionen (104) aus Teigportionen bestehen.

13. Verfahren gemäß Anspruch 12, wobei die Teigportionen als süßer Teig zur Herstellung von Keksen oder kleinen Schokokuchen formuliert sind.

14. Verfahren gemäß Anspruch 13, wobei der süße Teig weiterhin einen oder mehrere der Bestandteile Schokolade, Getreideflocken, Nüsse, Haferflocken, Rosinen, Süßwarenstückchen oder Marshmallows enthält.

15. Verfahren gemäß Anspruch 12, wobei der Teig auf der flächigen Platte (102) in der kompakten Konfiguration durch Extrudieren und/oder Pressen auf die Platte (102) in einer Menge abgelegt wird, die zur Ausbildung eines einzelnen gebackenen Teigproduktes ausreichend ist.

## Revendications

1. Produit de confinement d'article alimentaire prêt-à-cuire (100) comprenant :
une pluralité de portions d'article alimentaire (104) contenant chacun une quantité suffisante de pâte pour former un produit d'article alimentaire cuit particulier ; et
une feuille plane (102) de matériau apte à aller au four et agencée initialement dans une configuration compacte pour le transport et le stockage mais capable de s'étendre en une configuration étendue pour une cuisson, la configuration compacte présentant un périmètre qui est plus petit que celui de la feuille (102) dans la configuration étendue, la configuration compacte comprenant des limites définissant une pluralité d'emplacements, chaque emplacement étant configuré et dimensionné pour recevoir une portion d'article alimentaire unique (104);
dans lequel la feuille (102) est apte à être transformée facilement de la configuration compacte à la configuration étendue dans laquelle les portions d'article alimentaire (104) sont agencées en des emplacements espacés en position pour être cuit en lesdits produits d'article alimentaire cuits particuliers sans qu'un utilisateur n'aie à toucher l'article alimentaire.

2. Produit selon la revendication 1, dans lequel les portions d'article alimentaire (104) sont des portions de pâte.

3. Produit selon la revendication 2, dans lequel les portions de pâte sont rectangulaires et les limites de la feuille plane (102) dans la configuration compacte présentent une hauteur qui est au moins la moitié de la hauteur des portions de pâte rectangulaires.

4. Produit selon la revendication 1, dans lequel les limites de la feuille plane (102) sont procurées par pliage ou plissage de la feuille (102) et la configuration étendue est obtenue par dépliage ou déplissage de la feuille (102) sans retrait des portions d'article alimentaire (104) des emplacements qu'ils occupent sur la feuille (102).

5. Produit selon la revendication 4, dans lequel le pliage ou plissage est procuré le long de plans longitudinaux et latitudinaux afin de former des emplacements configurés uniformément pour les portions d'article alimentaire (104) de sorte que lorsque la feuille (102) est dans la configuration étendue les portions d'article alimentaire (104) sont espacées sensiblement régulièrement.

6. Produit selon la revendication 1, dans lequel la feuille (102) comprend du papier, carton, stratifié, parchemin, film d'aluminium, un polymère, ou une combinaison de ceux-ci.

7. Produit selon la revendication 1, comprenant en outre un suscepteur.

8. Produit selon la revendication 1, dans lequel la feuille (102) est perforée, marquée, gravée, ou marquée linéairement afin de permettre à un utilisateur de retirer des portions de la feuille (102) et des portions d'article alimentaire (104) pour une cuisson.

9. Produit selon la revendication 1, dans lequel les limites forment des cavités qui retiennent chacune d'elles une portion d'article alimentaire particulière (104) en leur sein.

10. Produit selon la revendication 9, dans lequel les limites des cavités présentent des hauteurs qui sont plus grandes que la hauteur des portions d'article alimentaire (104) dans les cavités.

11. Procédé de préparation de portions d'article alimentaire particulières (104) pour une cuisson, lequel comprend :
procurer une pluralité de portions d'article alimentaire (104) contenant chacun une quantité suffisante de pâte pour former un produit d'article alimentaire cuit particulier ;
procurer une feuille plane (102) de matériau apte à aller au four et agencée initialement dans une configuration compacte qui présente un périmètre qui est plus petit que celui de la feuille (102) dans une forme plane plate, la configuration compacte comprenant des limites définissant une pluralité d'emplacements sur la feuille (102), chaque emplacement étant configuré et dimensionné pour recevoir une portion d'article alimentaire (104); dans lequel la feuille (102) est apte à être transformée de la configuration compacte à une configuration plane plate dans laquelle les portions d'article alimentaire (104) sont agencées en des emplacements espacés sur la feuille (102) en position pour être cuit en lesdits produits d'article alimentaire cuits particuliers ; et
changer la feuille (102) de la configuration compacte à la configuration plane plate afin d'agencer les portions d'article alimentaire (104) sur la feuille pour une cuisson sans qu'un utilisateur n'aie à toucher l'article alimentaire.

12. Procédé selon la revendication 11, dans lequel les portions d'article alimentaire (104) sont des portions de pâte.

13. Procédé selon la revendication 12, dans lequel les portions de pâte sont formulées en tant que pâte sucrée pour fabriquer des biscuits ou des brownies.

14. Procédé selon la revendication 13, dans lequel la pâte sucrée comprend en outre un ou plusieurs éléments parmi chocolat, flocons de céréales, fruits à coque, avoine, raisin sec, morceaux de bonbon ou guimauve.

15. Procédé selon la revendication 12, dans lequel la pâte est déposée sur la feuille plane (102) dans la configuration compacte par extrusion et/ou pression sur la feuille (102) dans une quantité suffisante pour former un produit de pâte cuit particulier.
